# EUROPEAN PATENT APPLICATION

(11) **EP 3 298 895 A1**
(43) Date of publication of application: **28.03.2018**
(21) Application number: 16190208.5
(22) Date of filing: 22.09.2016
(51) Int. Cl.: A01N 25/28, B01J 13/16, C07D 207/34

(54) **BIOCIDAL MICROCAPSULES FOR BIOFOULING CONTROL**

(71) Applicant: Greenseal Research Ltd, 1600-542 Lisboa (PT)
(72) Inventor: Marques, Ana Clara Lopes, 1885-094 Moscavide-Portela (PT); Geraldes, Elisabete Ribeiro Silva, 2695-602 Sao Joao Da Talha (PT); Bordado, Joao Carlos Moura, 1000-268 Lisboa (PT)
(74) Representative: BiiP cvba

(57) **Abstract**

The present invention is directed to bioactive microcapsules and to the process for their production. More in particular, the present invention relates to the production of bioactive microcapsules, or porous microspheres by a water-in-oil (W/O) micro emulsion method combined with interfacial polymerization, involving the full or partial covalent immobilization of biocides and/or modified biocides within the microcapsules shell, or porous microspheres. In addition, the present invention further relates to the use of said bioactive microcapsules/microspheres for controlled release of biocides in anti fouling application and their incorporation in matrices such as marine coatings.

## Description

### Field of the invention

The present invention is directed to bioactive microcapsules and to the process for their production. More in particular, the present invention relates to the production of bioactive microcapsules, or porous microspheres by a water-in-oil (W/O) micro emulsion method combined with interfacial polymerization, involving the full or partial covalent immobilization of biocides and/or modified biocides within the microcapsules shell, or porous microspheres. In addition, the present invention further relates to the use of said bioactive microcapsules/microspheres for controlled release of biocides in anti fouling application and their incorporation in matrices such as marine coatings.

### Background of the invention

The adhesion and growth of micro/macroorganisms on surfaces, particulary in contact with aqueous mediums, is one of the most serious problems in a wide range of industrial sectors (e.g. shipping, water purification units, exterior walls as building façades, etc.). This undesired bio-attach, known as biofouling can promote substrate deterioration, systems clogging and fluids contamination, resulting on costly maintenance and retrofitting consequences. For instance, on shipping industry, perhaps one of the most prominent examples of biofouling burden, this bio-attach and accumulation on ships hulls can lead to drag friction increases up to 40% and subsequent fuel consumption and Greenhouse gas emissions increases.

So far, the most efficient and conventional methods to control biofouling on surfaces are mainly based on a chemical strategy which comprise the direct and/or controlled releasing of biocides into the contaminated surface. Most of these employ coatings incorporating biocides which act by a controllable releasing mechanism. However, the main drawbacks of those systems is the poor control on biocides releasing and the potential degradation of the biocides or toxic agents in the final product such as coating matrix. In particular, most coatings suffer of premature leakage of biocides, reducing its antifouling action before the end of coatings lifetime. Alternatively, higher biocides contents can be used to reach the required lifecycle, but the continued releasing of those toxic agents into the environment has proven to cause serious side effects on ecosystems, mainly owing to the ecotoxicity and cumulative effect of the applied bioactive agents. Therefore, rigid international regulations have been issued (BPD EU Regulation, 2012), and more are expected to come in a near future, which comprises the use of some current biocides and/or biocidal products. New alternative strategies have arisen, with particular interest on the microencapsulation technology. Microencapsulation of bioactive agents has emerged as a potential strategy to provide a controlled release of toxic agents into the contaminated area, as well as to protect the bioactive agent from the surrounding environment. However, the main desirable function of microcapsules is to control, i.e. retard, the release of the toxic or bioactive agent and, therefore promoting a longer biocidal and/or antimicrobial protection effect. A number of encapsulation methodologies have been developed and continuously improved to provide encapsulated bioactive agents for a wide range of applications, such as: internal phase separation, interfacial polymerization, formation of multiple emulsions, Layer-by-Layer adsorption of polyelectrolytes, soft templating techniques or combinations thereof. The selection of the method is mainly based on the bioactive agents physical/chemical properties (composition, size, physicalstate, hydrophilic/hydrophobic, compatibility) and on the desired release rate and profile.

Nonetheless, and despite the recognised improvement on the bioactive agents releasing mechanisms, these methods provide bioactive microcapsules that still act by a releasing of toxic biocides into the contaminated medium.

Alternative efforts have been done in order to find non-toxic antifouling systems involving encapsulation, which are usually focused on non-biocidal or biocide-free approaches, such as the encapsulation of enzymes. However, the approaches based on biocide releasing still are the most efficient and reliable for biofouling control. Release strategies based on soluble polymeric matrix and insoluble matrix has proven to be insufficient due to limited life time, less than 12 to 15 months, of the coatings formulated therewith. Although insoluble matrix tend to be higher in mechanical strength and stability to oxidation and photochemical degradation, both matrices have a high release of the biocide into the aquatic environment with limited action to some microorganism species and have to be combined with other bioactive agents with respect to efficiency. This is equally the case with so-called Self-polishing coatings which are polymers that produce a soluble microlayer, through a "slow hydrolysis" mechanism, controlled by copolymeric chains lateral groups.

From the above it is clear that there remains a need for environmental friendly biocide strategies which are able to combine higher efficiency against biofouling and which are less to non-toxic for the environment.

Against the above needs, the present invention provides for biocidal , preferably polyurethane-polyurea, microcapsules characterized by a core-shell morphology, or porous polymeric microspheres, which can offer a controllable biocidal action from a partial/total biocides immobilization by covalent bonds within the microcapsules shell, or microspheres. This present invention also allows the encapsulation of different bioactive agents in a same microcapsule, extending its range of action and ability to be adapted to different conditions and promoters of biofouling, therefore, supporting synergistic actions of the applied bioactive agents.

### DETAILED DESCRIPTION OF THE INVENTION

Microcapsules (MC's) are particles comprising an inner core containing the active substance and which is surrounded by a polymer layer (polymer membrane). These can be mononuclear, when these are constituted by a single core, or polynuclear, if it is in the presence of more than one core within the shell.

The present invention is directed to different embodiments including Biocide containing microcapsules having a core shell morphology or porous polymeric microsphere characterized in that the biocide is fully or partially immobilized within the shell of the microcapsule or porous microsphere. According to another embodiment, the biocide containing microcapsules is further characterized whereby the biocide is partially encapsulated within the core of the microcapsule. According to a specific embodiment, the material of the shell is a polymer selected from homopolymers and/or copolymers and/or organic/inorganic formulated hybrid polymers such as a enriched silica polymers. Preferred polymers are those selected from the group comprising polyurethane/polyurea polymer. According to a further embodiment, the present invention relates to polymeric compositions comprising the biocide containing microcapsule such as a paint, adhesive, polymeric foam or polymeric fiber. In yet another embodiment, the present invention relates to the use of a microcapsule to provide biological effect by contact with the organisms to be treated therewith and/or the use of microcapsules to provide biological effect by release and by contact with the organisms to be treated therewith. The process embodiments of the present invention relate to preparing biocide containing microcapsules having a core shell morphology or porous polymeric microsphere said process comprising a water-in-oil microencapsulation with interfacial polymerization and/or the process whereby the biocide is functionalized to allow immobilization of the biocide within the shell of the microcapsule or porous microsphere. In a preferred embodiment, the biocide has a NH functionality and is reacted with an isocyanate functionality such as isocyanate.

The present invention refers to biocidal microcapsules and a process for the production of biocidal microcapsules acting through two different mechanisms: biocide releasing and by contact. This ability is provided by biocides physical/chemical immobilization either within the microcapsules core and on the shell, respectively. These novel hybrid microcapsules with biocidal effect will mainly provide a long-lasting and efficient antifouling effect, because the biocide is partially grafted within the shell and, at the same time, they offer a controlled release of biocidal agents. In addition, it is also possible to provide a total biocidal activity by contact, obtained from the full biocides immobilization within the microcapsules shell by covalent bonds (grafting). Thus, the new hybrid microcapsules (biocide-polymer material) allows the reduction of toxic agents into the environment and/or avoid their release, becoming a potential environmental friendly alternative for the conventional releasing antifouling processes, currently allied to serious environment side-effects and strict regulations.

The hybrid biocidal action (either by contact and by biocide release) of the microcapsules allows for their further application as an antifouling and/or antimicrobial additive for the formulation of polymeric materials (e.g.: varnishes, paints, adhesives, foams, fibers, etc.), and any other matrix or medium able to support and/or disperse the microcapsules, in order to providing antifouling properties by releasing and contact. For instance, those antifouling materials can be found in polymers industry, marine and fluids transport and treatment industrial systems or even agricultural sector where reducing contamination and toxic level of antifouling products is a priority. The claimed microcapsules are therefore a new environmentally friendly alternative for biofouling control.

The biocidal microcapsules of the present invention are synthesized by a water-in-oil (W/O) micro emulsion method combined with interfacial polymerization. The biocides are incorporated either in the aqueous phase or in the organic phase or both, with contents ranging from 0 to 60 wt.%. Depending on the biocide and/or modified biocide physical/chemical properties and purity, the optimum reaction conditions allow for the achievement of microencapsulation yields as high as 90 ± 5%.

The biocides to be used are typically biocides with recognized antifouling effect, in accordance with the present invention, are controlled released following their immobilization in the constitution of the microcapsule

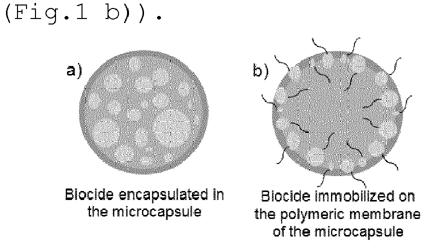

Figure 1 - Biocide immobilization in microcapsules: a) in the microcapsules core; b) in the microcapsules shell.

Microencapsulation/immobilization of biocides in accordance with the present invention ensures that the biocide remains chemically fixed, thus avoiding the releasing of biocide into the environment, also becoming a potential, non-toxic and "environmentally friendly" alternative.
The microencapsulation method in accordance with the present invention for the microcapsules synthesis is the microemulsion method combined with interfacial polymerization, since it promotes the formation of microcapsules with high mechanical strength and stability, then becoming difficult to break and facilitating the incorporation of those developed MC's into polymeric coatings.

The encapsulation method claimed in the present invention, comprises:
microencapsulation of biocides within the microcapsules core together with their chemical immobilization by covalent bonds within the microcapsules shell;
chemical immobilization by covalent bonds of functionalized biocides within microcapsules shell.
For both strategies a water-in-oil (W/O) micro emulsion method combined with interfacial polymerization is applied.

According to a specific embodiment , polyurethane-polyurea microcapsules (MC's) are synthesized by a micro emulsion method combined with interfacial polymerization, following two main strategies for biocide (such as Econea®, 2-(p-chlorophenyl)-3-cyano-4-bromo-5-trifluoromethyl pyrrole) microencapsulation: a) the encapsulation of biocide in the microcapsules core, thus acting by a controlled releasing mechanism; b) the immobilization of biocides within the shell of microcapsules by chemical binding, thus acting by contact, thus, avoiding at same time the releasing of toxic agents into the environment.

### EXPERIMENTAL PROCEDURE

### 2.1. Materials

The active compound used for encapsulation was the marine antifouling agent Econea®, supplied by *Janssen PMP* (95%). For the preparation of microcapsules, toluene (T) (99.8%) and N-methylpyrrolidone (NMP) (99%) were purchased from Sigma-Aldrich. Ongronat 2500® (O) (98%) was supplied by BorsodChem. Diethylene glycol (DEG) (99%) was obtained from Resiquimica. The surfactant DC193 was obtained from Dow Corning. Etanol (E) (99%) was purchased from Aga. Dimethyl sulfoxide (DMSO) (99.5%) was supplied by Lab-Scan, Analytical Sciences. All the chemicals were used as received and without further purification.

### 2.2. Biocidal microcapsules synthesis

The preparation of MC's with biocidal properties involves the mixing of two different composed solutions (organic and aqueous), which results in a microemulsion water-in-oil (W/O), in accordance with the interfacial polymerization, and in order to obtain polyurethane-polyurea microcapsules.

### 2.2.1. Microencapsulation of commercial biocide (Econea®)

The process of biocide microencapsulation involves in a first stage the mixing of two solutions: Solution 1 (organic phase) composed by 18.75 mL of toluene and 6.25 mL of Ongronat 2500®; and Solution 2 (aqueous phase) composed by distilled water (20 mL), surfactant DC193 (1 mL) and finally the biocide Econea (20 wt.%) dissolved NMP in order to achieve a content of 50 wt.%. In addition, and in order to assess the reagents effect on the final MC's composition and encapsulation ability, syntheses where the Solution 2 was composed by DEG (15 mL), distilled water (5 mL), surfactant DC193 (1.5 mL) and finally the biocide Econea (20 wt.%) were also performed. The Solution 1 was maintained in this case.
The amount of the encapsulated biocide can be optimized. Where for lower contents the biocide content could be too low to achieve potential biocidal effect, and for higher contents there could be an impact on the microcapsules morphologic properties.
In the above described syntheses cases, after the prior solutions preparation, follows the heating of both Solutions (1 and 2) at 55-60°C. Then the Solution 1 was added to the Solution 2 and further subjected to mixture using UltraTurrax, for about 10-20 minutes at 5000 rpm. This procedure gives rise to the formation of a microemulsion water-in-oil. The homogenized mixture was following heated to about 55-60°C and stirred (600 rpm) for 20 to 60 minutes using magnetic mixers. Along the reaction time, samples of the mixture were collected in order to monitoring, by direct observation from an optical microscope, the beginning of microcapsules formation.

After validation of MC's formation, the heating of the reaction mixture was stopped. The obtained MC's were subsequently filtered under vacuum at room temperature with ethanol, in order to promote their disintegration and finally stored in toluene.

### 2.2.2. Immobilization of isocyanate modified biocide (Econea-m)

For the immobilization of the biocide by chemical binding, the previous MC's solutions composition was modified, mainly due the fact that a modified biocide was used, obtained from a known functionalization process such as disclosed in published patent PT108096 and which possess isocyanate groups that are highly reactive in an aqueous environment. Thus, instead of adding the biocide solution in the aqueous phase (Solution 2), it was added in the organic phase (Solution 1).
The Solution 1 was composed by toluene (16.25 mL), Ongronat 2500® (6.25 mL), NMP (2.5 mL) and the modified biocide (20 wt.%). The Solution 2 was composed by distilled water, DEG and surfactant DC193 (1 mL).
After the prior solutions preparation, the procedure adopted for the preparation of MC's containing immobilized biocide was similar to the previous procedure followed for microencapsulation of commercial biocide, i.e., the solutions were heated to approximately 55-60°C. Thereafter the Solution 1 was added to the Solution 2 and the mixture was placed in an UltraTurrax for 5-20 minutes at 5000 rpm. After completion of this procedure, a water-in-oil microemulsion was obtained. Subsequently, the homogenized mixture was heated to about 55-60°C and with magnetic stirring (600 rpm) for 10-30 minutes. Over time, microemulsion samples were collected in order to monitoring, by direct observation from an optical microscope, the beginning of microcapsules formation. After validation of the MC's formation from the optical images, the heating of the mixture was stopped. The MC's formed were subsequently filtered under vacuum at room temperature with ethanol, in order to promote their disintegration and finally stored in toluene.

### 2.3. Microcapsules characterization

The methods/techniques used for the characterization of biocidal microcapsules include: optical microscopy, scanning electron microscopy (SEM), *Fourier* transform infrared spectroscopy (FTIR), leaching tests and microbiological tests.

### 2.3.1. Optical microscopy

The obtained biocidal microcapsules were observed on a zoom stereo microscope - *A. Kruss, MSZ 5600.*
For the observation under an optical microscope, it was collected small samples of microcapsules and placed on a glass coverslip (1x3 cm). Then the MC's were dispersed in ethanol and preceded of its observation with a 20x objective.

### 2.3.2. Scanning electron microscopy (SEM)

The morphology of the synthesized biocidal microcapsules was characterized by scanning electron microscopy (SEM), using a *JEOL 7001F* (JEOL, Tokyo, Japan) SEM-FEG (Field Emission Gun) microscope.
The samples were placed in the sample holder using conductive adhesive tape with double face. Thereafter, were covered with a conductor film of Au/Pd, of about 20 nm thick. All observations were made with electrons beams of 15 kV.

### 2.3.3. Fourier transform infrared spectroscopy (FTIR)

The FTIR spectroscopy analyses were performed on: a Nicolet 5700 (Thermo Electron Corporation), with a kBr beam splitter and a DTGS-TEC detector in the middle-infrared region, using an ATR accessory with a diamond crystal with a 4 cm⁻¹ resolution and 128 scans.

The FTIR analyses were performed in a frequency range of 600-4000 cm⁻¹, and recorded on a Nicolet Magna FTIR 550 spectrometer.

### 2.3.4. Biocide leaching assessment of microcapsules

Leaching tests were performed intending to determine the occurrence of biocide release through the microcapsule into the surroundings, in this case, artificial sea water.
The tested amount of microcapsules was such to provide the same biocide content or as much close as possible in all MC's samples, this is, about 2-3 wt.% in 7.5 mL of artificial sea water (0.1 L distillated water + 3.25g of salt [*sera marin salt,* pH=8.3]). Then the mixture was placed on a stirring plate with a rotation speed of 120 rpm. Samples of leaching waters were collected after the first 24 hours and after 30 days, to be further assessed in terms of bioactivity from microbiological tests. Preliminary leaching tests were also performed in dimethyl sulfoxide (DMSO) for some microcapsules.

### 2.3.5. Bioactivity assessment

Microbiological tests were performed to evaluate the biocidal activity of microcapsules and leaching waters obtained from microcapsules, by using the Well Diffusion Method.
Initially, the microorganisms were cultured on Muller-Hinton agar for bacteria *Staphylococcus aureus.* Then, 100 µL of a standardized microorganism suspension, corresponding to 0.5 McFarland, was used to inoculate a Petri dish of solid Mueller-Hinton medium. These suspensions were spread over the medium surface using a sterile swab. Subsequently, agar wells were made of approximately 5.0 mm in diameter with a Pasteur pipette. Then, 50 µL of each sample, negative control (DMSO) and positive control (Econea) for Gram positive bacteria (*Staphylococcus aureus*), were added on each of the wells. Plates were incubated at 37°C for 24 hours. After this period, the diameters of the inhibition zones were measured (no growth) and the results were expressed in millimeters (mm). The assay was performed under aseptic conditions and in triplicate [17, 18]. Different mediums were used to assess the bioactivity of microcapsules, which were artificial sea water, distillated water and DMSO.

### 2.4. Incorporation of microcapsules in a polymeric matrix (marine paint)

The biocidal MC's were incorporated in a biocide free polyurethane based marine paint (provided by HEMPEL, SA) and the resulted formulations were used to coat PVC plates (6x3 cm and 2x2 cm), in order to be further assessed in terms of bioactivity or antifouling effect.
Previously to the incorporation of the MC's in marine paint, these were subjected to dispersion to promote its deagglomeration. Required amounts (in order to achieve a content of 2-3 wt.% of biocide in paint formulation) of MC's (dry at room temperature) were dispersed in ethanol using an Ultraturrax with a rotation speed of 4000 rpm. It was allowed to evaporate part of ethanol, before redispersing the MC's in a solvent (in this case DMSO) with a content of approximately 40 wt.%. This procedure allows incorporation of the microcapsules into the polymer matrix in a more homogeneous possible way, avoiding or reducing subsequent problems, such as formation of lumps and roughness in the obtained polymeric films. Finally, the dispersion (MC's in DMSO) was added to the paint (polyurethane based) and curing agent.
The ratio proportion of polyurethane based paint (F0038 Base - F0032) and curing agent (F0038 Cure - 95580), (HEMPEL, SA) used was 11:1.

### 2.4.1. Leaching tests on coated plates

Leaching of the biocide through the paint films of the coated plates containing the developed biocidal MC's was assessed by leaching tests. Those tests consisted on the coated plates (6x3 cm) immersion in 100 mL glasses containing artificial seawater (0.1 L distillated water + 3.25g salt [*sera marin salt,* pH=8.3]) under controlled conditions along of the time. These were placed on a stirring plate with a rotation speed of 120 rpm for about 30 days. Finally, the leaching waters were analyzed on microbiological tests to detect any bioactivity (section 2.4.2).

### 2.4.2. Bioactivity and biocide leaching assessment on

### polymeric paint films

Microbiological tests were performed to evaluate the bioactivity of:
Coating films with incorporated biocidal MC's;
Leaching waters obtained from tested coated plates with marine paint containing biocidal MC's.

The followed procedure was similar to the one described in section 2.3.5.
Different mediums were used to assess the bioactivity of paint films: artificial sea water and DMSO.

### Results :

Yields as high as 90 ± 5% have been achieved with the microcapsules according to the present invention. From the developed biocidal microcapsules, the ones with encapsulated Econea (20 wt.%) evidenced the best morphologic properties, i.e., were characterized by uniform and relatively well-defined and smooth polymeric membrane (shell). However, microbiological analysis demonstrated that all developed biocidal MC's possess bioactivity. In addition, leachates analysis of those MC's evidenced a biocide releasing mechanism. Nevertheless, both followed strategies can provide either a biocide releasing mechanism and/or biocidal action by contact, depending on the chemical immobilization degree of the biocide with NH, or NCO functionally. Furthermore the biocidal MC's were incorporated in a biocide free polyurethane based marine paint, the resulted formulations were used to coat PVC plates, in order to be further assessed in terms of bioactivity and/or antifouling effect. Leaching tests in artificial seawater of the coated plates, performed for about 30 days, did not result in any substantial biocide releasing. Microbiological analysis on paint films of prepared formulation in accordance with the present invention evidenced bioactivity.

Biocidal polyurethane-polyurea microcapsules (MC's) were successfully synthesized by following a microemulsion method combined with interfacial polymerization. Two different strategies were followed: - the microencapsulation of commercial biocide (Econea®) in the MC's' core and the chemical immobilization of modified biocide (Econea-m) in MC's' shell. For both strategies, and in order to achieve well-structured microcapsules possessing a excellent biocide encapsulation capacity, several experimental parameters were assessed and optimized, such as stirring speed, the reaction temperature, the volume ratio between the dispersant and dispersed phase, support solvent and the type and amount of surfactant. Yields as high as 90 ± 5%, were achieved for the obtained biocidal MC's.
SEM and optical images evidenced that MC's with encapsulated biocide (Econea®) originates more uniform MC's possessing a better defined shell, when compared with MC's containing immobilized modified biocide (Econea-m) in their shell. FTIR analysis were very conclusive, allowed to realize that when the core is composed only by water and biocide, the shell is mainly composed of polyurea in turn, when the core is composed by water, DEG and biocide, the shell is mainly composed of polyurethane, exhibiting also polyurea moieties. Finally, microbiological analysis confirmed that the obtained MC's containing biocide are bioactive.
Biocidal MC's (namely MC's with encapsulated Econea® (20 wt.%) and MC's with immobilized Econea® (20 wt.%) were incorporated in a biocide free polyurethane based marine paint (provided by HEMPEL, SA), and used to coat PVC plates. The microbiological tests carried out on paint films containing MC's with encapsulated Econea proved to be bioactive, followed by MC's with immobilized Econea on the polymeric shell.

It is clear from the above that Biocidal polyurethane-polyurea microcapsules synthesis by a water-in-oil (W/O) micro emulsion method combined with interfacial polymerization, able to support biocides either in the aqueous phase or in the organic phase or both, with contents up to 60 wt.%. The optimum reaction conditions allow for the achievement of microencapsulation yields as high as 90 ± 5%, depending on the biocides or derivatives physical-chemical properties. Biocide immobilization ability through covalent bonds within the microcapsule shell or microsphere matrix, providing these antifouling properties by contact. Thus, avoiding their release into the environment, and therefore extending their biocidal action and avoiding any allied side-effect associated to the Eco toxicity of the biocides. The biocidal microcapsules according to the present invention provide efficient antifouling and/or antimicrobial protection by two mechanisms: bioactive agents release and through contact; or only by contact thereby representing thereby a long-lasting and non-toxic and/or environmentally friendly antifouling alternative. The present invention provides for compatibility on the immobilization of different biocides in a same microcapsule system, in order to widening the antifouling range of action of the obtained biocidal product, and therefore, providing potential synergistic effects. The biocidal microcapsule of the present invention are compatible with a diversity of polymer systems, which makes them able to be applied in many applications, particularly as ingredients in paint formulations, varnishes, adhesives, foams or fibers formulations and/or in the formulation of polymeric based materials, in the form of coatings or bulk materials. In these strands, they can be applied in antifouling products used for the protection of: marine structures (aquaculture, platforms, ships, etc.), fluids treatment circuits and the like.

## Claims

1. Biocide containing microcapsules having a core shell morphology or porous polymeric microsphere **characterized in that** the biocide is fully or partially immobilized within the shell of the microcapsule or porous microsphere

2. Biocide containing microcapsules according to claim 1 whereby the biocide is partially encapsulated within the core of the microcapsule.

3. A microcapsule comprising wherein the material of the shell is a polymer selected from homopolymers and/or copolymers and/or organic/inorganic formulated hybrid polymers such as a enriched silica polymers.

4. A microcapsule wherein the polymer is selected from the group comprising polyurethane/polyurea polymer.

5. A polymeric composition comprising the biocide containing microcapsule as defined in claim 1.

6. A polymeric composition according to claim 5 which is a paint composition

7. The use of microcapsules as defined in claim 1 to provide biological effect by contact with the organisms to be treated therewith

8. The use of microcapsules as defined in claim 2 to provide biological effect by release and by contact with the organisms to be treated therewith

9. A process of preparing biocide containing microcapsules having a core shell morphology or porous polymeric microsphere said process comprising a water-in-oil microencapsulation with interfacial polymerization.

10. A process according to claim 9 whereby the biocide is functionalized to allow immobilization of the biocide within the shell of the microcapsule or porous microsphere

11. A process according to claim 9 whereby the biocide has a NH functionality and reacted with an isocyanate functionality
